# EUROPÄISCHE PATENTSCHRIFT

(11) **EP 2 287 092 B1**
(45) Veröffentlichungstag und Bekanntmachung des Hinweises auf die Patenterteilung: **16.04.2014**
(21) Anmeldenummer: 10172974.7
(22) Anmeldetag: 16.08.2010
(51) Int. Cl.: B65G 1/04, B65G 1/137

(54) **Halb- und/oder vollautomatisches kommissioniersystem**
Semi and/or fully automated picking system
Système de commissionnement semi-automatique et/ou totalement automatique

(30) Priorität: 17.08.2009 DE 102009026386; 17.08.2009 US 234422 P
(43) Veröffentlichungstag der Anmeldung: 23.02.2011
(60) Teilanmeldung: 13191481.4
(73) Patentinhaber: Winkler, Walter, 92711 Parkstein (DE)
(72) Erfinder: Winkler, Walter, 92711 Parkstein (DE)
(74) Vertreter: Lang, Christian

(56) Entgegenhaltungen:
- EP-A1- 1 462 393
- EP-A2- 1 136 395
- WO-A1-2007/134840
- WO-A1-2008/022767
- DE-A1-102004 014 378

## Beschreibung

### HINTERGRUND DER ERFINDUNG

### GEBIET DER ERFINDUNG

Die vorliegende Erfindung betrifft eine Vorrichtung sowie ein Verfahren zur halb-und/oder vollautomatischen Kommissionierung von Waren.

### STAND DER TECHNIK

Aus dem Stand der Technik sind vielfältige Systeme zur Kommissionierung von Waren, d. h. zur Zusammenstellung verschiedener Waren in einer Versand- und / oder Verpackungseinheit, die nachfolgend als Ausgangseinheit bezeichnet werden sollen, bekannt. Die bekannten Kommissioniersysteme unterscheiden sich hinsichtlich des Anteils der manuellen und automatisierten Tätigkeiten, also hinsichtlich des Automatisierungsgrades, sowie des erreichbaren Warendurchsatzes und der Effizienz. So sind bereits voll automatisierte Kommissioniersysteme bekannt, die jedoch unter Umständen auf Grund des hohen Investitionsbedarfs erst für die Kommissionierung einer großen Anzahl unterschiedlicher Waren und einem entsprechenden Mengendurchsatz der zu kommissionierenden Waren wirtschaftlich betrieben werden können. Entsprechend gibt es auch heute noch vielfach Systeme, bei denen eine Vielzahl manueller Tätigkeiten zu verrichten ist, wobei hier unterschiedliche Belastungen für die Mitarbeiter im Kommissioniersystem bestehen, die jedoch generell gering gehalten werden sollen. Die Arbeitsplätze für manuelle Tätigkeiten sollen insbesondere ergonomisch ausgebildet sein. Darüber hinaus gibt es sowohl bei vollautomatisierten Systemen als auch bei halbautomatisierten Systemen den Bedarf die Effizienz zu steigern.

Hieraus ergibt sich, einerseits durch die verschiedenen Kommissionieraufgaben mit Unterschieden hinsichtlich der Art und Beschaffenheit der zu kommissionierenden Waren, der Vielfalt der unterschiedlichen Waren, der Anzahl der zu kommissionierenden Waren etc. sowie andererseits auf Grund des Bestrebens dem Arbeitsschutz Rechnung zu tragen und Arbeitsplätze zur Verfügung zu stellen, die keine schweren körperlichen Tätigkeiten beinhalten, sowie dem wirtschaftlichen Zwang effiziente Systeme zu verwenden, dass ein Kompromiss zwischen sehr einfachen manuellen und aufwendigen, komplexen automatisierten Systemen gefunden werden muss, welcher zudem effizient ausgestaltet sein soll. Dies bedeutet, dass der gewählte Automatisierungsgrad eines Kommissioniersystems von den Gegebenheiten der individuellen Kommissionieraufgabe abhängen kann, wobei gleichwohl immer eine hohe Effizienz des Kommissioniersystems erreicht werden soll. Beispiele für Kommissioniersysteme sind in der EP 1 136 395 A2, EP 1 462 393 A1, WO 2007/134840 A und DE 10 2004 014378 A1 beschrieben.

### OFFENBARUNG DER ERFINDUNG

### AUFGABE DER ERFINDUNG

Es ist deshalb Aufgabe der vorliegenden Erfindung ein weitgehend automatisiertes Kommissioniersystem bzw. ein unterschiedlich automatisierbares Kommissioniersystem sowie eine entsprechende Vorrichtung und ein Verfahren bereitzustellen, welches bei niedrigem technischem Aufwand eine effektive Kommissionierleistung bei bestmöglicher Ergonomie ermöglicht.

### TECHNISCHE LÖSUNG

Diese Aufgabe wird gelöst durch eine Vorrichtung mit den Merkmalen des Anspruchs 1 sowie ein Verfahren mit den Merkmalen des Anspruchs 13. Vorteilhafte Ausgestaltungen sind Gegenstand der abhängigen Ansprüche.

Nach einem ersten Aspekt der Erfindung wird bei dem erfindungsgemäßen Kommissioniersystem eine Vorrichtung mit mindestens einem Regal eingesetzt, wobei das Regal von einer Seite automatisiert bestückt wird, während von der anderen Seite die Entnahme der Waren zur Kommissionierung, also zur Zusammenstellung einer entsprechenden Ansgangseinheit, erfolgt. Das mindestens eine Regal der erfindungsgemäßen Kommissioniervorrichtung umfasst somit eine erste Seite, die als Lagerseite bezeichnet wird, von der aus das Regal vollautomatisiert mit Waren versorgt wird, während auf der gegenüberliegenden Seite des Regals, d. h. einer zweiten Seite, der sogenannten Entnahmeseite, die Entnahme der Waren erfolgt, um diese auf einem Ladungsträger für die kommissionierten Waren anzuordnen, um so eine Ausgangseinheit bestehend aus den kommissionierten Waren zu bilden.

Nach einem weiteren Aspekt kann das Kommissioniersystem halb- und/oder vollautomatisch ausgebildet sein, je nachdem ob die Entnahme der Waren auf der Entnahmeseite voll- oder halbautomatisiert erfolgt. Hierbei können Systeme verwirklicht werden, die entweder nur vollautomatisiert arbeiten oder nur halbautomatisiert entnehmen. Darüber hinaus sind jedoch auch Mischkonzepte mit einer Mischung aus voll- bzw. halbautomatisierter Entnahme möglich. Die Wahl, ob eine vollautomatisierte oder halbautomatisierte Variante oder entsprechende Mischformen gewählt werden, hängt davon ab, welche Kommissionieraufgabe erledigt werden muss. Entsprecehnd kann auch ein fest installiertes Kommissioniersystem für eine bestimmte Aufgabe geschaffen werden oder das Kommissioniersystem kann variabel für verschiedene Einsatzgebiete anpassbar ausgelegt werden.

Insbesondere wird vorgeschlagen eine Kombination einer vollautomatisierten Einlagerung der Waren in ein Kommissionierlager bzw. Regallager mit einer voll- und/oder halbautomatischen Entnahme der Waren aus dem Kommissionierlager bzw. Regallager zu realisieren, wobei bei der vollautomatisierten Einlagerung der Waren eine vollautomatische Depalettisierung bzw. allgemein ausgedrückt Vereinzelung der Waren aus einer Versand- und Verpackungseinheit der angelieferten Waren, nachfolgend auch als Eingangseinheit bezeichnet, vorgesehen ist.

Ausgangspunkt hierfür ist ein System zum Kommissionieren von in Regallagern befindlichen Artikeln, wie es in der europäischen Patentschrift EP 1 136 395 B1 beschrieben ist. Bei dem bekannten System werden ganze Eingangseinheiten, also z.B. Paletten mit sortenreinen Waren in einem Regallager eingelagert, wobei mit einem speziellen Entnahmefahrzeug die Waren halbautomatisch aus dem Regallager entnommen und auf einem Ladungsträger zur Bildung einer Ausgangseinheit, wie z.B. einer Palette oder einem Rollcontainer, gestapelt werden. Die Einlagerungsseite (Lagerseite) und die Entnahmeseite des Lagers sind hierbei voneinander getrennt, so dass Einlagerungs- und Entnahmevorgänge getrennt voneinander und ohne gegenseitige Störung durchgeführt werden können. Auf dem Entnahmefahrzeug der EP 1 136 395 B1 ist ein Arbeitsplatz für einen Bediener zum Entnehmen der Waren und Stapeln der Waren auf dem Ladungsträger vorgesehen, welcher ebenfalls auf dem Entnahmefahrzeug angeordnet ist. Das Entnahmefahrzeug ist ergonomisch optimiert und wird entsprechend als EPM (Ergonomic Picking Machine oder Ergonomic Picking Mobile) bezeichnet.

Gegenüber diesem bekannten System geht die vorliegende Erfindung jedoch einen Schritt weiter, in dem eine vollautomatische Einlagerung der Waren in das Regallager erfolgt, wobei über einen Depalettierer eine Vereinzelung der Waren erfolgt und die Einzelwaren in dem Regallager in jeweils entsprechend zugeordneten Regalfächern eingelagert werden.

Durch die Depalettierung und damit Vereinzelung der Waren von größeren Eingangseinheiten, bei denen eine Vielzahl von üblicherweise identischen Waren in einer großen Einheit zusammengefasst sind, ist eine Verkleinerung der Lagereinheiten möglich. Auf diese Weise können sämtliche Waren oder zumindest ein Großteil der zu kommissionierenden Waren in einem eng begrenzten Bereich des Lagers zur Verfügung gestellt werden, so dass das Entnahmefahrzeug keine langen Wege zurück legen muss. Weiterhin wird dadurch die Möglichkeit geschaffen, dass mit einem einzigen Entnahmefahrzeug ein Kommissionierauftrag vollständig abgearbeitet werden kann, ohne dass der Ladungsträger, auf dem die Ausgangseinheit zusammengestellt wird, von einem Entnahmefahrzeug auf das andere Entnahmefahrzeug übertragen oder in sonstiger Weise durch Fördereinrichtungen in einen anderen Bereich des Lagers überführt werden müsste.

Die vollautomatische Einlagerung erhöht den Automatisierungsgrad beträchtlich, wobei jedoch der gesamte Aufwand für die Automatisierung gering gehalten werden kann, so dass das Nutzen-Aufwand-Verhältnis sehr vorteilhaft ist. Die Einzelwaren können hierbei als einzelne Gegenstände oder Verkaufseinheiten in ihrer entsprechenden Verpackung in der Vorrichtung gehandhabt werden oder zur weiteren Handhabung in der Vorrichtung auf oder in Trägern angeordnet werden, wobei die Träger Tabletts, Trays, Boxen oder Behälter umfassen können. Die Anordnung der Einzelwaren auf entsprechenden Trägern ist insbesondere für die Waren vorgesehen, die auf Grund ihrer Form für ein automatisches System schwer handhabbar sind, wie beispielsweise Säcke oder dergleichen. Auf einem Träger können auch mehrere Einzelwaren angeordnet werden, und zwar neben- und/oder übereinander.

Im Folgenden werden, wenn von Einzelwaren die Rede ist, auch solche verstanden, die auf Trägern, wie Trays, angeordnet sind, wobei kleinere Einheiten von wenigen Einzelwaren, z. B. 10, 5 oder 3 Einzelwaren zusammengefasst sein können. Allerdings kann auch nur eine einzige Ware auf einem Träger angeordnet sein. Unter Einzelware wird somit bei der vorliegenden Anmeldung ein einzelner Gegenstand, wie beispielsweise ein Karton oder eine Getränkekiste verstanden, wobei ein entsprechender einzeln handhabbarer Gegenstand, wie z.B. der Karton wiederum mehrere Gegenstände enthalten kann. In gleicher Weise sind die Träger, die einzelne oder mehrere Gegenstände umfassen können und in dem Regal zum Kommissionieren eingelagert werden, als Einzelwaren anzusehen. Diese weisen gegenüber den nicht depalettierten Eingangseinheiten den Vorteil auf, dass sie gegenüber diesen Eingangseinheiten in ihren Dimensionen auf jeden Fall zumindest in einer Dimension kleiner sind. Dadurch verringert sich der Stauraum für das Kommissionierregal bzw. -lager und die sogenannte Picking-Front, also die Entnahmeseite, wird klein gehalten.

Bei der vorliegenden Erfindung können insbesondere alle oder ein großer Anteil der von dem System zu kommissionierenden Waren als depalettierte Einzelwaren in dem Lager der Kommissioniervorrichtung eingelagert werden. Damit sind alle eingelagerten Waren in kleineren Einheiten vorgesehen, als sie angeliefert werden.

Die Depalettierung der Waren, also allgemein die Vereinzelung der in einer größeren Verpackungs- und Versandeinheit (Eingangseinheit) angelieferten sortenreinen Waren bietet also den Vorteil, dass das Regallager kleiner dimensioniert werden kann, so dass ein Teil des zusätzlichen Aufwands für die Depalettierung durch eine Einsparung beim Regallager kompensiert wird. Um ausreichend Ware vorrätig zu haben, können Pufferlager mit einfacherer Struktur, die also z.B. keine Kommissioniermöglichkeit bieten, zusätzlich vorgesehen sein.

Das für die Kommissionierung der Waren bei der vorliegenden Erfindung verwendete Lager, welches auch als Einzelwarenlager oder als Kleinteilelager bezeichnet werden kann weist somit entsprechende Lagerplätze auf, bei denen lediglich einige wenige Einzelwaren gelagert sind. Insbesondere an der Entnahmeseite des Lagers kann für jede zu kommissionierende Einzelware ein Lagerfach vorgesehen sein, welches eine einzige Einzelware aufnimmt. Lediglich zwischen der Entnahmeseite und der Lagerseite können mehrere Lagerplätze hintereinander vorgesehen sein, so dass insgesamt die Entnahmeseite klein dimensioniert sein kann, also in der Größe minimal der Fläche entspricht, die durch die Summe der benötigten Fächer aller zu kommissionierender Einzelwaren gegeben ist.

Darüber hinaus kann das Lager wie bereits beschrieben als Regallager mit übereinander und nebeneinander angeordneten Regalflächen gebildet sein. Allerdings sind auch andere Lagerformen, wie z. B. flächige Lager usw. vorstellbar.

Durch die kleine Dimensionierung des Lagers ist eine einfache Zusammenstellung einer Ausgangseinheit mittels eines Entnahmefahrzeugs möglich.

Entsprechend bietet die Vereinzelung der Waren und die Einlagerung von Einzelwaren in dem Regallager den Vorteil, dass auf Grund der kleineren Dimensionierung der entsprechenden Regalfächer und somit auch der gesamten Regale auf eine Verkettung und Verknüpfung der Transportlogistik auf der Entnahmeseite, also insbesondere das Zusammenwirken verschiedener Entnahmefahrzeuge für die Durchführung eines Kommissioniervorgangs, verzichtet werden kann, was erhebliche Vorteile bei der Steuerung der gesamten Anlage bietet, da die Steuerung erheblich vereinfacht wird.

Bei einem entsprechenden erfindungsgemäßen Einzelwarenregallager kann nämlich vorgesehen werden, dass in einem einzigen Regal bzw. einem einzigen Regalmodul oder einem Entnahmekanal, in dem mindestens ein Entnahmefahrzeug bewegt wird, zumindest ein Großteil der zu kommissionierenden Waren eingelagert ist bzw. von einem einzigen Entnahmefahrzeug erreicht werden kann, so dass mit einem einzigen Entnahmefahrzeug ein Kommissioniervorgang bzw. zumindest Teilvorgang bis ein entsprechender Ladungsträger zur Aufnahme der zu kommissionierenden Waren voll ist, abgeschlossen werden kann. Insbesondere können in einem Regal bzw. Regalmodul ca. wenigstens 80 Prozent, vorzugsweise ca. wenigstens 90 Prozent und insbesondere ca. wenigstens 95 Prozent oder alle der zu kommissionierenden Waren enthalten bzw. von den Entnahmefahrzeug entnehmbar sein, so dass komplizierte und aufwendige Übergaben des Ladungsträgers, der die zu kommissionierenden Waren aufnimmt, von einem Entnahmefahrzeug auf das andere Entnahmefahrzeug bzw. entsprechende Puffer oder Übergabebereiche sowie die entsprechende informationstechnische Verarbeitung dieser Vorgänge eingespart werden können. Da bekannt ist, dass mit wenigen Waren eine Vielzahl von Kommissioniervorgängen erledigt werden kann, kann im Einzelfall auch ein geringerer Anteil der Waren in einem Regalmodul eingelagert werden oder für ein Entnahmefahrzeug erreichbar sein. Somit richtet sich die Anzahl der in einem Regalmodul eingelagerten oder für ein Entnahmefahrzeug erreichbaren Waren vorzugsweise danach, dass wenigstens eine bestimmte Anzahl von allen im System anfallenden Kommissioniervorgängen durch jeweils ein Entnahmefahrzeug abgearbeitet werden kann, und zwar vorzugsweise ca. wenigstens 80 %, insbesondere ca. wenigstens 90 %, höchst vorzugsweise ca. wenigstens 95 % aller Kommissioniervorgänge.

Unter Regalmodul wird hier ein Modul aus mindestens einem Regal, mindestens einem Regalfahrzeug zur Bestückung des Regals mit zu kommissionierenden Waren und mindestens einem Entnahmefahrzeug verstanden, bei dem ein Entnahmefahrzeug sämtliche Regalfächer bzw. Lagerfächer erreichen kann. Entsprechend kann beispielsweise ein zweites Regal vorgesehen sein, welches mit dem ersten Regal eine Entnahmegasse bzw. einen Entnahmekanal einschließt, in dem sich das Entnahmefahrzeug linear hin und her bewegt. Da jedes Regal von einer der Entnahmeseite gegenüber liegenden Seite (Lagerseite) bestückt wird, kann dem Regalmodul ein zweites Regalfahrzeug zur Bestückung des Regals zugeordnet sein, wobei nebeneinander liegende Module sich auch ein Regalfahrzeug teilen können.

Darüber hinaus kann einem Regalmodul zusätzlich ein Vorratsregal zugeordnet sein, so dass das Regalfahrzeug des entsprechenden Regalmoduls schnell und in einfacher Weise den Nachschub in das Regal liefern kann.

Die Vorrichtung kann entsprechend mehrere Module mit mehreren Regalen und mehreren Regal- und Entnahmefahrzeugen aufweisen.

Wie bereits oben erwähnt, kann das Entnahmefahrzeug ein Lagerbediengerät zur automatisierten Entnahme der Waren aus dem Regal bzw. Lager aufweisen. Bei einer halbautomatischen Ausbildung, kann das Entnahmefahrzeug einen Arbeitsplatz für einen Bediener umfassen, der die Waren manuell aus dem Regal bzw. Lager entnimmt und auf dem für die Ausgangseinheit vorgesehnen Ladungsträger auf dem Entnahmefahrzeug stapelt.

Das entsprechende Entnahmefahrzeug mit einem Bedienerarbeitsplatz kann entsprechend den Entnahmefahrzeugen der EP 1 136 395 B 1 so ausgestaltet sein, dass der Ladungsträger, auf dem die Waren für die Ausgangseinheit zusammengestellt werden, relativ zum Arbeitsplatz des Bedieners bewegbar ist, so dass die entsprechende Stapelhöhe individuell auf den Bediener angepasst und nach Kommissionierfortschritt entsprechend verändert werden kann, so dass immer eine optimale Arbeitshöhe für den Bediener beim Stapeln der Ware auf den Ladungsträger der Ausgangseinheit gegeben ist. Darüber hinaus ist ein entsprechendes Entnahmefahrzeug mit einem Arbeitsplatz für einen Bediener aber auch ein vollautomatisiertes Entnahmefahrzeug mit einem Lagerbediengerät so ausgestaltet, dass es nicht nur durch Verfahren entlang des Regals jedes der nebeneinander angeordneten Lagerfächer erreichen kann, sondern durch eine Höhenverstellung auch jedes der übereinander angeordneten Lagerfächer. Entsprechend ist also der Arbeitsplatz für den Bediener selbst auch höhenverstellbar ausgebildet.

Bei der Kommissionierung kann der Bediener durch eine Zeigevorrichtung unterstützt werden, die anzeigt, wo der Bediener die aus dem Regal entnommene Ware auf dem Ladungsträger oder einem darauf gebildeten Stapel ablegen soll oder muss. Damit kann die Anlagensteuerung bzw. das entsprechende informationstechnische System, das die Kommissionierung und somit die entsprechende Vorrichtung steuert, eine optimale Ladungsverteilung auf dem Ladungsträger gewährleisten. Außerdem kann sehr schnell eine hohe Kommissionierleistung auch mit ungelernten Arbeitskräften erzielt werden.

Die Steuerung der Vorrichtung bzw. des Kommissioniersystems erfolgt vorzugsweise durch eine Datenverarbeitungsanlage, auf der entsprechende Steuerprogramme ablaufen.

Bei der Depalettierung, bei der die angelieferten sortenreinen Waren von entsprechenden Eingangseinheiten, wie beispielsweise EU-Paletten entnommen werden, kann zusätzlich eine Einrichtung zur Anordnung der Waren auf einem Ladungsträger für den Transport von der Depalettierstation zum Einzelwarenlager und/oder für die Lagerung der Einzelwaren im Regal bzw. Lager vorgesehen sein. Dies gilt insbesondere für derartige Waren, die auf Grund ihrer Beschaffenheit, wie beispielsweise Form und dergleichen, an sich schwer automatisiert handhabbar sind. Die Ladungsträger können durch jede geeignete Form von Ladungsträger gebildet sein, wie beispielsweise einlagig oder mehrlagig bestückbare Trays oder Tabletts, bei denen Waren nebeneinander und/oder übereinander angeordnet sind, sowie sogenannte Einzeltrays oder -tabletts, bei denen lediglich ein einzelner Gegenstand auf einem Tray oder Tablett angeordnet ist. Darüber hinaus sind auch Behälter, wie Kisten, Container oder dergleichen denkbar sowie Paletten, halbe Paletten oder Viertel-Paletten. Bei der Verwendung von Paletten, wie beispielsweise EU-Standardpaletten, für die Lagerung im Einzelwarenlager ist es lediglich wesentlich, dass eine Verkleinerung der Eingangseinheit erfolgt, also beispielsweise von Doppelstockpaletten auf einzelne EU-Paletten. Allerdings wird vorzugsweise eine Lagerung der Gegenstände als tatsächliche Einzelware bevorzugt, da dadurch ein sehr geringer Raumbedarf gegeben ist, welcher für das Wesen der vorliegenden Erfindung besonders bedeutsam ist.

Von der Depalettierstation bis zum Lager bzw. Regal werden die vereinzelten Einzelwaren mittels Fördertechnik bewegt und schließlich an das Regalfahrzeug übergeben, welches sie in die entsprechenden Fächer einlagert. Dies wird durch die Steuereinheit der Vorrichtung bzw. des Kommissioniersystems gesteuert, welche auch erfasst und speichert, welche Waren in welchem Lagerfach gelagert sind. Allerdings kann durch die Steuereinheit die Belegung des Regals dynamisch verändert und somit auch den Anforderungen des Kommissioniersystems angepasst werden.

Die Fördertechnik von der Depalettierstation zum Regalfahrzeug kann über stetige und/oder unstetige Fördertechnik erfolgen, wobei unter stetiger Fördertechnik derartige Anlagen zu verstehen sind, die eine kontinuierliche Bewegung durchführen, wie z. B. umlaufende Bandförderer, Rollenförderer oder dergleichen. Bei unstetiger Fördertechnik wird eine nicht kontinuierliche, beispielsweise wiederholte, schrittweise Bewegung durchgeführt, wie beispielsweise die Bewegung auf Schiebewägen, insbesondere Querverschiebewägen oder dergleichen.

Durch die Gestaltung der Fördertechnik zwischen der Depalettierstation und dem Regalfahrzeug durch Zwangsführung der Waren und eine kurze Gestaltung der Wegstrecke, ohne Abzweigungen und Zusammenführungen und dergleichen kann auf eine direkte Zielverfolgung der Waren mit entsprechenden Identifizierungsstationen verzichtet werden, so dass vielfältige und unterschiedliche Waren mit der Vorrichtung kommissioniert werden können. Es muss also somit nur eine indirekte Zielverfolgung auf der Wegstrecke zwischen Depalettierstation und Einzelwarenregal eingesetzt werden, da der Steuereinheit die Information übermittelt werden kann, welche Waren gerade bei der Depalettierstation vereinzelt werden, so dass die Steuereinheit genau erfassen kann, in welche Lagerfächer die entsprechenden Einzelwaren eingelagert werden. Da nur noch erfasst werden muss, welches Lagerfach das Regalfahrzeug angefahren und bestückt hat, ist die Erfassung der Information, welche Waren in welchen Regalfächern lagern, sehr einfach. Bei der indirekten Zielverfolgung ist somit keine genaue Identifizierung der Waren erforderlich, sondern lediglich ein Erfassen, ob die vorher bekannte Ware die bestimmte Wegstrecke zurückgelegt hat. Dies ist durch einfach Mittel wie Zählschranken und dergleichen einfach erreichbar. Damit kann das gesamt System vereinfacht werden.

Bei der Entnahme werden die kommissionierten Waren auf einem Ladungsträger angeordnet, der auf dem Entnahmefahrzeug mit geführt wird. Der Ladungsträger kann durch jeden geeigneten Ladungsträger gebildet sein, wie beispielsweise Paletten, EU-Paletten, halbe EU-Paletten, Viertel - EU-Paletten, Rollcontainer, Einzelbehälter, Mehrfachbehälter, die auf Behälterplatten oder in Transportregalen angeordnet sind, und dergleichen.

Darüber hinaus können auch Kombinationen von Ladungsträgern vorgesehen werden, sodass zunächst auf einem ersten Basisladungsträger entsprechende Waren direkt abgelegt und gestapelt werden, während danach ein zusätzlicher kleinerer Ladungsträger, wie beispielsweise eine halbe EU-Palette oder eine Viertel-EU-Palette oder beliebige andere Trays oder Tabletts angeordnet werden, auf denen dann kleinere Waren kommissioniert werden können. Die Reihenfolge, wann derartige zweite Ladungsträger oder Zwischenträger eingesetzt werden, ergibt sich aus den Notwendigkeiten hinsichtlich der Waren und des Kommissionierauftrags. So können die zweiten Ladungsträger oder Zwischenträger mit ihren Waren zu Beginn auf den ersten Ladungsträger, also im unteren Teil des Stapels, gestapelt werden oder am Ende des Kommissioniervorgangs, also im oberen Bereich des Stapels. Darüber hinaus ist auch eine Zwischenstapelung, also in einem mittleren Bereich des Stapels denkbar.

Entsprechend können bei einer erfindungsgemäßen Vorrichtung zur Kommissionierung von Waren nicht nur unterschiedliche Ladungsträger an sich Verwendung finden, sondern diese unterschiedlichen Ladungsträger können auch in einem Einzelnen Kommissioniervorgang Einsatz finden.

### KURZE BESCHREIBUNG DER FIGUREN

Weitere Vorteile, Kennzeichen und Merkmale der vorliegenden Erfindung werden bei der nachfolgenden detaillierten Beschreibung eines Ausführungsbeispiels anhand der beigefügten Zeichnungen deutlich. Die Zeichnungen zeigen hierbei in rein schematischer Weise in
- Figur 1: eine Prinzipskizze einer erfindungsgemäßen Vorrichtung; und in
- Figur 2: eine Seitenansicht des Regallagers der erfindungsgemäßen Vorrichtung.

### AUSFÜHRUNGSBEISPIEL

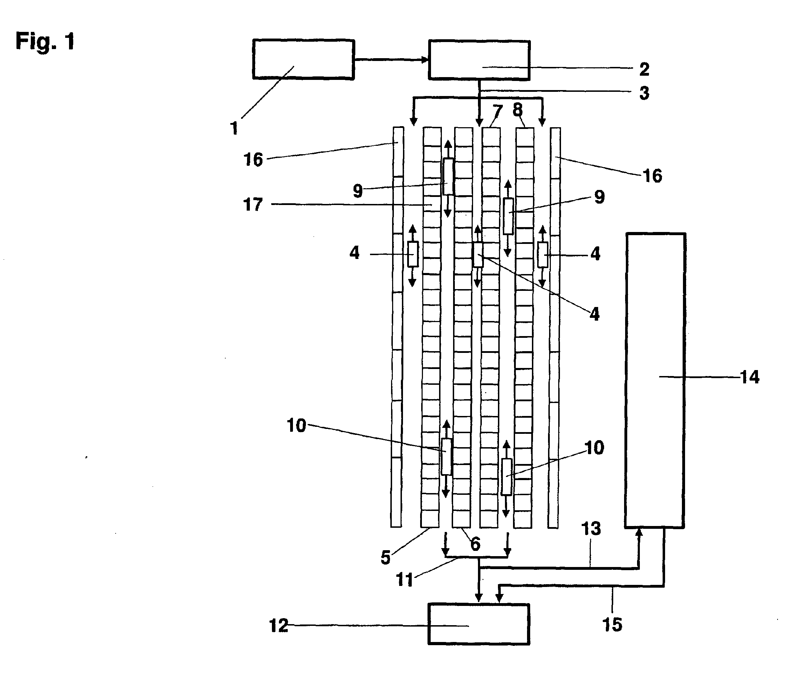

Die Figur 1 zeigt eine schematische Prinzipskizze einer erfindungsgemäßen Vorrichtung.

Die Vorrichtung umfasst einen Wareneingang 1, in dem die zu kommissionierenden Waren in größeren Verpackungs- und Versandeinheiten angeliefert werden, die als Eingangseinheiten bezeichnet werden. Die Eingangseinheiten werden im Wareneingang in einem informationstechnischen System über entsprechenden Datenverarbeitungsanlagen und Software erfasst sowie bei Bedarf von entsprechendem Verpackungsmaterial, das die Eingangseinheit umgibt, wie beispielsweise Schrumpffolie oder Wickelfolie, befreit. Üblicherweise werden die Eingangseinheiten auf Paletten, beispielsweise EU-Standardpaletten, angeliefert. Die Eingangseinheiten umfassen sortenreine Waren, also Gegenstände des gleichen Typs, die einzeln oder in kleineren Verkaufseinheiten vorliegen. Diese einzelnen Waren bzw. Verkaufseinheiten werden im Folgenden als Einzelwaren bezeichnet.

Vom Wareneingang 1 werden die Eingangseinheiten zu einem Depalettierer 2 befördert, der die Eingangseinheiten mit ihrer Vielzahl von Einzelwaren vereinzelt. Die Einzelwaren können hierbei als einzelne Gegenstände oder Verkaufseinheiten in ihrer entsprechenden Verpackung in der Vorrichtung weiter behandelt werden oder zur weiteren Verarbeitung in der Vorrichtung auf oder in Trägern angeordnet werden, wobei die Träger Tabletts, Trays, Boxen oder Behälter umfassen können. Die Anordnung der Einzelwaren auf entsprechenden Trägern ist insbesondere für die Waren vorgesehen, die auf Grund ihrer Form für ein automatisches System schwer handhabbar sind, wie beispielsweise Säcke oder dergleichen. Auf einem Träger können auch mehrere Einzelwaren angeordnet werden. Im Folgenden werden, wenn von Einzelwaren die Rede ist, auch solche verstanden, die auf Trägern, wie Trays, angeordnet sind.

Die von dem Depalettierer 2 vereinzelten Waren werden über Fördertechnik 3 zu einem Regallager befördert, wo sie an automatisierte Regalfahrzeuge 4 übergeben werden. Die Regalfahrzeuge 4 bewegen sich in Versorgungskanälen entlang von Regalen, die insbesondere als Kommissionierregale 5, 6, 7, 8 bezeichnet werden können. Die Kommissionierregale 5, 6, 7, 8 weisen eine Vielzahl von übereinander und nebeneinander angeordneten Regalfächern auf, in die die vereinzelten Waren durch die Regalfahrzeuge 4 voll automatisiert eingelagert werden können. In der Darstellung der Figur 1 sind eine Vielzahl von Regalfächern 17 nebeneinander in den Kommissionierregalen 5, 6, 7, 8 gezeigt.

Das Regallager ist nunmehr so aufgebaut, dass an jedem Kommissionierregal 5, 6, 7, 8 jeweils an einer Seite ein Versorgungskanal mit einem entsprechenden Regalfahrzeug 4 vorgesehen ist, während auf der gegenüberliegenden Seite die Kommissionierseite ausgebildet ist, die einen Entnahmekanal begrenzt, entlang dem sich mindestens ein Entnahmefahrzeug 9 bewegt. Im gezeigten Ausführungsbeispiel sind zwei Entnahmefahrzeuge 9,10 pro Entnahmekanal vorgesehen.

Während das Regalfahrzeug 4 im Versorgungskanal am Kommissionierregal 5 bzw. 6 bzw. 7 oder 8 entlang fährt und auch durch eine entsprechende Hubbewegung die übereinander angeordneten Regalfächer 17 ansteuern und somit jedes Regalfach mit entsprechender Ware versorgen kann, ist auf der Entnahmeseite des entsprechenden Regals 5, 6, 7, 8 ein Entnahmefahrzeug 9 vorgesehen, welches sich ebenfalls entlang der Regale 5, 6, 7, 8 bewegen kann und ebenfalls durch eine entsprechende Hubbewegung bzw. Höhenverstellung auch die übereinander angeordneten Regalfächer 17 ansteuern kann. Die Regalfächer 17 sind so ausgebildet, dass sie durch das Regal 5, 6, 7, 8 hindurchgehen, so dass die Ware die von dem Regalfahrzeug 4 auf der einen Seite in das Regalfach 17 hineingeliefert wird, auf der anderen Seite entnommen werden kann. Damit die Ware im Regalfach 17 von der einen Seite zur anderen Seite leichter bewegt werden kann, können die Regalfächer beispielsweise mit Rollbahnen versehen und geneigt ausgebildet oder mit einer entsprechenden Zug- oder Schiebevorrichtung ausgestattet, so dass die Waren in Richtung der Seite, an der das Entnahmefahrzeug fährt, also der Kommissionierseite bewegt werden können. Allerdings können die Regalfächer 17 auch als einfache, ebene Lagerfächer ausgebildet sein.

Die Lagerfächer 17 können so ausgebildet sein, dass mehrere gleiche Waren hintereinander in den Regalfächern angeordnet sind.

Wie sich aus der Darstellung der Figur 1 ergibt, sind bei dem gezeigten Ausführungsbeispiel in jedem Entnahmekanal 2 Entnahmefahrzeuge 9 und 10 vorgesehen, während lediglich ein Regalfahrzeug 4 im Versorgungskanal angeordnet ist. Allerdings können auch mehrere Regalfahrzeuge 4 in einem Versorgungskanal vorgesehen sein und lediglich ein oder mehr als zwei Entnahmefahrzeuge im Entnahmekanal.

Ein Regal 5, 6, 7, 8 und ein Regalfahrzeug 4 sowie ein Entnahmefahrzeug 9, 10 bilden ein Modul. Die Vorrichtung kann entsprechend mehrere Module aufweisen, wobei mehrere Module sich entsprechende Entnahmefahrzeuge 9, 10 und Regalfahrzeuge 4 teilen können. Im gezeigten Ausführungsbeispiel der Figur 1 sind beispielsweise vier Module vorgesehen, wobei das erste Modul das Regalfahrzeug 4, das Regal 5 und die Entnahmefahrzeuge 9 und 10 umfasst. Das zweite Modul mit dem Regal 6 teilt sich mit dem Modul 1 die Entnahmefahrzeuge 9, 10 und mit dem dritten Modul, welches durch das Regal 7 gebildet ist, das Regalfahrzeug 4, während das dritte Modul sich wiederum die Entnahmefahrzeuge 9 und 10 mit dem vierten Modul, welches durch das Regal 8 gebildet ist, teilt.

Wie in der Darstellung der Figur 1 zu sehen ist, sind in einem Entnahmekanal zwei Entnahmefahrzeuge 9, 10 angeordnet, wobei die Entnahmefahrzeuge 9, 10 so angeordnet sind, dass sie die gesamte Länge der benachbarten Regale 5, 6 bzw. 7, 8 abfahren können, so dass sie jedes Regalfach 17 der entsprechenden Regale 5, 6, 7, 8 erreichen können. Entsprechend ist beispielsweise das Entnahmefahrzeug 10 im Entnahmekanal zwischen den Regalen 5 und 6 in der äußersten Position gezeigt, so dass das andere Entnahmefahrzeug 9 bis an den äußersten Rand der Regale 5 und 6 verfahren werden kann.

An den seitlichen Rändern des Regallagers sind Vorratsregale 16 angeordnet, die durch die Regalfahrzeuge 4 bedient werden können und dazu dienen, Waren vorzuhalten, die in die Kommissionierregale 5, 6, 7, 8 nachgeführt werden können. Darüber hinaus können weitere Lagerbereiche (nicht gezeigt) vorgesehen sein, in denen entsprechende Waren bevorratet sein können. Diese Lager können sowohl Eingangseinheiten als auch bereits vereinzelte Waren beinhalten und über entsprechende Fördertechnik entweder mit dem Wareneingang 1 oder direkt mit dem Regallager verbunden sein, so dass die Waren direkt an die Regalfahrzeuge 4 übergeben werden können.

Die Entnahmefahrzeuge 9, 10 sind so ausgebildet, dass sie einen Bediener und einen Ladungsträger für die zu kommissionierenden Waren tragen. Während die Einlagerung der Waren über die Depalettierung 2, die Fördertechnik 3 und die Regalfahrzeuge 4 vollautomatisiert verläuft, ist die Entnahme der Waren aus den Regalfächern 17 halbautomatisiert. Der Bediener muss bei diesem halbautomatisierten Verfahren lediglich die entsprechenden Waren, die ihm beispielsweise bezüglich der Anzahl der zu entnehmenden Waren von einem Display angezeigt werden, aus den Regalfächern entnehmen und auf dem Ladungsträger schlichten. Die Fahrt des Entnahmefahrzeugs 9, 10 zu den Regalfächern 17 und die Anzeige der zu entnehmenden Waren erfolgt automatisiert und wird durch das informationstechnologische System bzw. einer Anlagensteuerung vorgegeben, die entsprechend eines Kommissionierauftrags den Arbeitsablauf steuert.

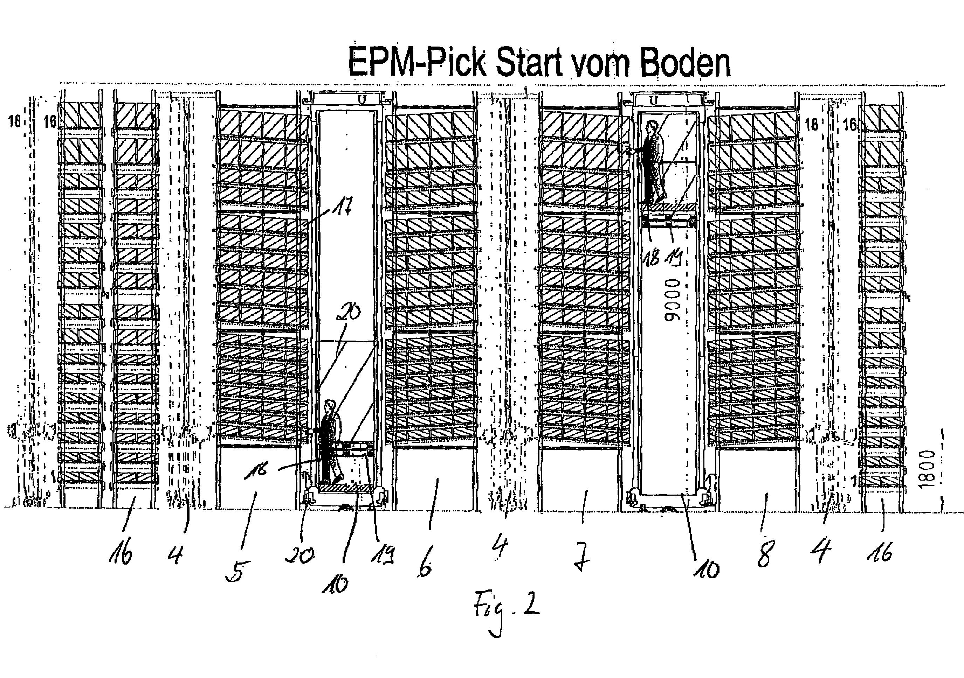

Die Struktur eines entsprechenden Entnahmefahrzeugs kann am Besten der Figur 2 entnommen werden. Dort ist ein entsprechendes Entnahmefahrzeug 10 in einer Seitenansicht gezeigt.

Das Entnahmefahrzeug 10 weist beispielsweise eine Schienenanordnung auf, die ein Verfahren des Entnahmefahrzeugs 10 entlang der Regale 5, 6, 7, 8 ermöglicht. Darüber hinaus weist das Entnahmefahrzeug 10 eine Rahmenanordnung auf, in welcher ein erstes Podest für den Bediener 18 und ein zweites Podest, auf dem der Ladungsträger 19 für die zu kommissionierenden Waren angeordnet ist, vorgesehen sind. Die Podeste können insgesamt und relativ zueinander in der Höhe verstellt werden. Wie sich beispielsweise in der Figur 2 ergibt, ist das Podest für den Bediener 18 beim im Bild linken Entnahmefahrzeug 10 tiefer angeordnet, als das Podest für den Ladungsträger 19, so dass der Bediener 18 in ergonomisch einfacher Weise die Ware aus einem Lagerfach 17 entnehmen und direkt auf dem Ladungsträger 19 oder einem darauf bereits gebildeten Stapel ablegen kann, ohne Hubarbeit verrichten zu müssen. Bei dem Entnahmefahrzeug, wie es im rechten Bildteil gezeigt ist, ist die Situation umgekehrt, dort nämlich ist die Plattform des Bedieners 18 bereits höher angeordnet als die Plattform des Ladungsträgers 19, so dass der Bediener 18 wiederum ohne Hubarbeit verrichten zu müssen aus dem Lagerfach 17 entsprechende Ware auf dem bereits auf dem Ladungsträger 19 gebildeten Stapel ablegen kann.

Bei dem gezeigten Ausführungsbeispiel der Figur 2 ist der Ladungsträger eine Palette, wie beispielsweise eine EU-Standardpalette. Um auf dieser Palette ein sauberes Schlichten bzw. Stapeln der Waren zu ermöglichen, kann ein einseitig offener Schlichtcontainer 20 vorgesehen sein, welcher als Anlagefläche für die Waren für ein besseres Stapeln dient. Der Schlichtcontainer bildet jedoch keinen Teil der durch das Stapeln gebildeten Palettenladung.

Zur Unterstützung der Palettenbildung kann eine Zeigevorrichtung (nicht gezeigt) vorgesehen sein, die anzeigt, wo auf der Palette bzw. einem bereits gebildeten Stapel die nächste Einzelware abgelegt werden soll bzw. muss. Die Zeigevorrichtung kann durch einen Strahler gebildet sein, der einen Lichtstrahl auf den geplanten Stapelort richtet, wie z.B. ein Laser, eine Beamer mit fokussiertem Lichtstrahl oder eine ähnliche Vorrichtung. Außerdem kann durch die Zeigevorrichtung auch ein virtuelles Bild am Ablageort erzeugt werden, welches genau angibt, wie die Lage, Orientierung, Ausrichtung, Größe und Form des abzulegenden Gegenstandes am Ablageort auszusehen hat. Die Informationen hierzu können aus den gespeicherten Daten zu den zu kommissionierenden Waren gewonnen werden. Die Steuerung der Zeigevorrichtung erfolgt über das informationstechnische System bzw. die Anlagensteuerung, die gemäß dem zu kommissionierenden Auftrag das Entnahmefahrzeug an die entsprechenden Regalfächer 17 steuert, dem Bediener beispielsweise über ein Display angibt, welche Waren in welcher Anzahl zu entnehmen sind und entsprechend zusätzlich die Zeigevorrichtung steuert, damit dem Bediener vorgegeben wird, wie die einzelnen Waren zu stapeln bzw. auf dem Ladungsträger abzulegen sind. Außerdem wird das Entnahmefahrzeug ergonomisch positioniert, also insbesondere gegenüber dem Lagerfach, aus dem die zu kommissionierenden Waren entnommen werden müssen, in der richtigen Position angeordnet. Dies betrifft insbesondere die Höhenanpassung eines Fahrkorbs des Entnahmefahrzeugs, in dem der Bediener bzw. Kommissionierer steht oder sitzt, und/oder der Stapelpalette bzw. des darauf bereits angeordneten Stapels auf die Höhe des Lagerfaches, in dem die zu kommissionierenden Waren gelagert sind, um ein leichtes Überführen der Ware aus dem Lagerfach auf das Entnahmefahrzeug zu ermöglichen, und zwar insbesondere ohne Hubarbeit verrichten zu müssen.

Die Zeigevorrichtung kann auf dem Entnahmefahrzeug 9,10 an jeder geeigneten Stelle angeordnet werden. Ferner ist es denkbar, die Zeigevorrichtung auch im Display des Entnahmefahrzeugs zu integrieren, wo dem Bediener an einem fiktiven Stapel der richtige Ablageort angezeigt werden kann.

Die Figur 2 zeigt auch die Lagerböden der Lagerfläche 17, die ein automatisches Nachführen der Waren an die Kommissionierseite der Regale 5, 6, 7, 8 ermöglichen. Des Weiteren sind in der Figur 2 auch die Vorratslager 16 gezeigt.

Die Figur 1 zeigt weiterhin, dass die Vorrichtung Ergänzungssysteme 14 umfassen oder mit diesen zusammenwirken kann. Unter Ergänzungssysteme 14 sind andere Lager- und / oder Kommissioniereinrichtungen gemeint, welche zur Ergänzung vorgesehen sein können. Beispielsweise kann ein gewisser kleiner Prozentteil der zu kommissionierenden Waren sehr selten verkauft werden, so dass sich ein hoher Automatisierungsgrad für die Kommissionierung für diese Warengruppe nicht rechnet. In diesem Fall könnte das Ergänzungssystem ein weniger automatisiertes Kommissioniersystem sein, wie beispielsweise ein sogenanntes Car-Picking-System, bei welchem ein Ladungsträger für die zu kommissionierenden Waren mit bereits kommissionierten Waren oder leer von einem Fahrzeug mit einem Bediener manuell zu entsprechenden Lagerfächern gefahren wird, um dort die entsprechenden Waren aus den Lagerfächern zu entnehmen. Hier ist also der Automatisierungsgrad dadurch gesenkt, dass das manuell bediente Fahrzeug nicht wie die Entnahmefahrzeuge 9 und 10 automatisiert an die entsprechenden Lagerfächer herangeführt werden, sondern durch einen menschlichen Bediener. Zu diesem Zweck können die fertiggestellten Ausgangseinheiten, also Einheiten aus dem Ladungsträger mit den darauf kommissionierten Waren, die über die Fördertechnik 11 aus dem Regallager abtransportiert werden, über eine entsprechende Abzweigung 13 zu den Ergänzungssystemen 14 geführt und über die Transportstrecke 15 entweder wieder direkt in die Fördertechnik 11 oder unmittelbar in ein Warenausgangsmodul 12 zugeführt werden. Das Warenausgangsmodul 12 kann beispielsweise eine Folienwickelstation umfassen, in der die fertig gestellten Ausgangseinheiten mit einer Folie umwickelt werden, um ihnen die entsprechende Stabilität zu verleihen.

Die Ladungsträger, die auf den Entnahmefahrzeugen 9, 10 leer angeordnet werden und dann mit den entsprechenden zu kommissionierenden Waren beladen werden, können durch alle möglichen geeigneten Einrichtungen gebildet sein, wie beispielsweise normale EU-Standardpaletten, sonstige palettenartige Träger oder Behälter sowie auch Rollcontainer und dergleichen. Die entsprechenden Ladungsträger können einzeln auf den Entnahmefahrzeugen 9, 10 angeordnet sein oder zu zweit oder mehreren.

Die Vorrichtung ist nun so ausgebildet, dass in jedem Regal 5, 6, 7, 8 oder jedem Versorgungskanal derart viele Lagerfächer 17 angeordnet sind, so dass ca. wenigstens 80 Prozent aller in dem System zu kommissionierenden Waren, vorzugsweise ca. wenigstens 90 Prozent, höchst vorzugsweise ca. wenigstens 95 Prozent aller zu kommissionierenden Waren bzw. alle zu kommissionierende Waren untergebracht werden können und/oder ca. wenigstens 80 %, vorzugsweise ca. wenigstens 90 %, insbesondere ca. wenigstens 95 % aller Kommissioniervorgänge durch jeweils ein Entnahmefahrzeug abgeschlossen werden können. Entsprechend kann ein Entnahmefahrzeug 9, 10 mindestens 80 Prozent, vorzugsweise 90 Prozent, insbesondere 95 Prozent oder sämtliche zu kommissionierenden Waren entnehmen, so dass mit einem Entnahmefahrzeug 9, 10 ein gesamter Kommissioniervorgang komplett abgeschlossen werden kann, ohne dass es irgendwelche Übergabepunkte oder Verkettungsstellen geben müsste.

Obwohl die Regale 5, 6, 7, 8 als gerade, senkrecht stehende Regale, in der Art eines Hochregallagers dargestellt sind, können die Lagerfächer 17 auch in jeder anderen Form und Weise angeordnet sein, wie zum Beispiel liegend, mit mehreren Regalen übereinander, mit gekrümmten oder abgewinkelten Entnahmekanälen usw. In diesem Fall kommt es lediglich darauf an, dass ein einziges Entnahmefahrzeug ca. wenigstens 80 Prozent, vorzugsweise ca. wenigstens 90 Prozent, insbesondere ca. wenigstens 95 Prozent oder alle zu kommissionierenden Waren erreichen kann, um mit diesem Entnahmefahrzeug einen Kommissioniervorgang bzw. einen Teil eines Kommissioniervorgangs bis zu der vollständigen Beladung eines Ladungsträgers abschließen zu können.

Die Kommissionierung erfolgt nun in der Weise, dass nach der vollautomatisierten Depalettisierung, die allgemein eine Vereinzelung der Waren von der Eingangseinheit ist, die Waren über die Fördertechnik 3 und die Regalfahrzeuge 4 voll automatisiert so in die Regale 5, 6, 7, 8 eingelagert werden, dass jeweils ein Entnahmefahrzeug 9, 10 sämtliche Waren mindestens jedoch 80 Prozent, vorzugsweise 90 Prozent, insbesondere 95 Prozent der Gesamtheit der zu kommissionierenden Waren erreichen kann. Entsprechend wird bei einem Kommissionierauftrag durch das informationstechnologische System dem Entnahmefahrzeug 9, 10 vorgegeben, welche Fächer 17 angefahren werden, so dass der Bediener auf dem Entnahmefahrzeug 9 die ihm angezeigte Anzahl der entsprechenden Waren aus den Regalfächern 17 entnehmen und auf dem auf dem Entnahmefahrzeug 9 bereitgestellten Ladungsträger 19 stapeln kann. Das informationstechnologische System gibt die Sequenz der nacheinander zu stapelnden Waren gemäß bestimmter Kriterien, in im informationstechnologischen System hinterlegt sein können, vor, wie beispielsweise Gewicht, Größe der Waren etc. Ferner kann eine Zeige- und/oder Projektionsvorrichtung den Bediener durch Anzeige des Stapelplatzes bei der Kommissionierung eines gemischten Warenstapels unterstützen.

Der Kommissionierauftrag des informationstechnologischen Systems an das Entnahmefahrzeug 9 mit seinem Bediener 18 umfasst beispielsweise den Bestellvorgang eines Einzelhandelsgeschäftes an den Großhändler oder ein zentrales Distributionslager. Das informationstechnische System stellt gemäß der Bestellung die Entnahmesequenz zusammen und steuert dann das entsprechende Entnahmefahrzeug 9, 10 zu den entsprechenden Lagerfächern 17, wo der Bediener 18 die Waren entnimmt und auf dem bereitgestellten Ladungsträger vorzugsweise nach Vorgabe stapelt. Reicht ein Ladungsträger für den Bestellvorgang aus, so ist die Kommissionierung entsprechend abgeschlossen. Werden mehrere Ladungsträger benötigt, so kann der Kommissionierauftrag nacheinander von einem Entnahmefahrzeug 9, 10 mit mehreren Ladungsträgern abgearbeitet werden, oder der Kommissionierauftrag wird in Teile entsprechend eines vollen Ladungsträgers unterteilt, so dass verschiedene Entnahmefahrzeuge jeweils einen vollständigen Ladungsträger, also beispielsweise eine vollständig gestapelte EU-Palette bilden.

Umfasst der Kommissionierauftrag unterschiedliche Waren, die es erfordern, dass zur besseren Stapelung weitere Ladungsträger verwendet werden, die unterschiedlich zu den ersten Ladungsträger sind und die als Zwischenträger bezeichnet werden können, so kann das Entnahmefahrzeug 9 mit dem Bediener 18 zu einem geeigneten Zeitpunkt also beispielsweise zum Start des Kommissioniervorgangs oder zum Ende des Kommissioniervorgangs oder auch innerhalb des Kommissioniervorgangs zu einer Stelle im Regalmodul bzw. am Regal fahren, an der entsprechende Zwischenträger (Ladungsträger zweiter Art) entnommen werden können. Diese Zwischenträger oder zweite Ladungsträger wird dann auf dem ersten Ladungsträger oder bereits darauf befindlichen Waren abgelegt und anschließend kann der Bediener 18 mit dem Entnahmefahrzeug 9 die für den Zwischenträger oder zweiten Ladungsträger geeigneten Waren aus dem Regal entnehmen und den Kommissioniervorgang fortsetzen bzw. beenden.

Die leeren Ladungsträger, die bei der Entnahme der Einzelwaren aus den Regalfächern 17 in diesen verbleiben, können entweder durch das Entnahmefahrzeug 9,10 oder das Regalfahrzeug 4 von den Regalen entfernt werden.

Obwohl die vorliegende Erfindung anhand der beigefügten Beispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen werden können oder andere Kombinationen der vorgestellten Merkmale gewählt werden können ohne dass der Schutzbereich der beigefügten Ansprüche verlassen wird.

## Patentansprüche

1. Vorrichtung zur Kommissionierung von Waren,
welche umfasst:
eine Depalettierstation, die die Waren vollautomatisch von einer Eingangseinheit in Einzelwaren vereinzelt,
eine Fördertechnik (3) zum automatischen Befördern der Einzelwaren von der Depalettierstation zu einem Regallager mittels indirekter Zielverfolgung, bei der auf eine Identifizierungstation verzichtet wird und mit Mitteln zum Erfassen, ob die vorher bekannte Ware eine bestimmte Wegstrecke zurückgelegt hat,
ein Regallager mit zwei oder mehrere Regalen (5, 6, 7, 8) und mit einem vollautomatischen Regalfahrzeug (4) an einer ersten Seite (Lagerseite) jedes Regals (5, 6, 7, 8), wobei das Regalfahrzeug (4) die Einzelwaren automatisiert von der Fördertechnik (3) in das Regallager (5,6,7,8) einlagert, und mit mindestens einem Entnahmefahrzeug (9, 10) mit mindestens einem Ladungsträger (19) für die kommissionierten Waren, welches man einer zweiten Seite (Entnahmeseite) jedes Regals (5, 6, 7, 8), welche der Lagerseite mit dem Regalfahrzeug (14) gegenüber liegt, angeordnet ist.

2. Vorrichtung nach Anspruch 1,
**dadurch gekennzeichnet, dass**
das Kommissioniersystem halb- und/oder vollautomatisch ausgebildet ist, wobei bei der halbautomatischen Ausbildung die Waren an der Entnahmeseite manuell entnommen werden, während bei der vollautomatischen Ausbildung die Waren automatisiert durch ein Gerät entnommen werden.

3. Vorrichtung nach Anspruch 1 oder 2,
**dadurch gekennzeichnet, dass**
das mindestens eine Entnahmefahrzeug (EPM) (9, 10) für mindestens einen Bediener (18) ausgebildet ist, welcher die Waren aus dem Regal (5, 6, 7, 8) auf den Ladungsträger (19) für kommissionierte Waren überführt.

4. Vorrichtung nach Anspruch 1 oder 2,
**dadurch gekennzeichnet, dass**
das mindestens eine Entnahmefahrzeug (9,10) ein Lagerbediengerät zur automatisierten Entnahme der Waren aus dem Regal (5, 6, 7, 8) umfasst,

5. Vorrichtung nach einem der vorhergehenden Ansprüche,
**dadurch gekennzeichnet, dass**
ein Regal (5, 6, 7, 8) mit mindestens einem Regalfahrzeug (4) und einem Entnahmefahrzeug (9, 10) ein Regaimodul bildet.

6. Vorrichtung nach Anspruch 5,
**dadurch gekennzeichnet, dass**
ein Regalmodul zusätzlich ein zweites Regal (5, 6, 7, 8) umfasst und dem Regalmodul ein zweites Regalfahrzeug (9,10) zugeordnet ist und/oder
ein Regalmodul zusätzlich ein Vorratsregal (16) umfasst und/oder dass mehrere Module mit mehreren Regalen (5,6,7,8) und mehreren Regal- und Entnahmefahrzeugen (4, 9, 10) vorgesehen sind.

7. Vorrichtung nach einem der vorhergehenden Ansprüche,
**dadurch gekennzeichnet, dass**
ein Regal (5, 6, 7, 8) oder Regahmodul eine Anzahl von Lagerplätze (17) aufweist, die von einem Entnahmefahrzeug (9, 10) aus zugängliche sind, wobei die Anzahl dieser Lagerplätze (17) der Anzahl von ca. wenigstens 80%, insbesondere ca. wenigstens 90%, vorzugsweise ca. wenigstens 95% oder aller in der Vorrichtung zu kommissionierenden Waren entspricht, oder so gewählt ist, dass ca, wenigstens 80%, insbesondere ca. wenigstens 90%, vorzugsweise ca. wenigstens 95% oder alle Kommissioniervorgänge von jeweils einem Entnahmefahrzeug (9,10) erledigt werden können.

8. Vorrichtung nach einem der vorhergehenden Ansprüche,
**dadurch gekennzeichnet, dass**
das Regal (5, 6, 7, 8) mehrere Lagerplätze (17) für gleiche Einzelwaren hintereinander von der Seite des Regalfahrzeugs (4) zur Seite des Entnahmefahrzeugs (9, 10) uanfasst.

9. Vorrichtung nach einem der vorhergehenden Ansprüche,
**dadurch gekennzeichnet, dass**
die Vorrichtung Ergänzungssysteme (14) zur Kommissionierung eines geringen Anteils aller zu kommissionierender Waren umfasst.

10. Vorrichtung nach einem der vorhergehenden Ansprüche,
**dadurch gekennzeichnet, dass**
die Fördertechnik (3) zwischen Depalettierstation (2) und Regallager so hergerichtet ist, dass sie die vereinzelten Waren vollautomatisch von der Depalettierstation (2) an das Regallager übergibt und/oder
die Depalettiersation eine Einrichtung zur Anordnung der Waren auf Trägem (Trays) umfasst.

11. Vorrichtung nach einem der vorhergehenden Ansprüche,
**dadurch gekennzeichnet, dass**
das Entnahmefahrzeug (9, 10) so hergerichtet ist, dass es automatisiert an die Entnahmeposition bewegt wird.

12. Vorrichtung nach einem der vorhergehenden Ansprüche,
**dadurch gekennzeichnet, dass**
eine Zeigevorrichtung vorhanden ist, die anzeigt, wo die Ware auf dem Ladungsträger (19) fürt kommissionierte Ware abgelegt wird oder werden muss.

13. Verfahren zur Kommissionierung von Waren, welches umfasst:
a) automatisiertes Depalettieren von Waren einer Eingangseinheit (1) in vereinzelte Waren (Einzelwaren);
b) automatisierter Transport der Einzelwaren in ein Regallager mittels indirekter Zielverfolgung, bei der keine Identifizierung der Waren erfolgt sondern lediglich ein Erfassen, ob die vorher bekannte Ware eine bestimmte Wegstrecke zurückgelegt hat;
c) automatisiertes Einlagern in eines von zwei oder mehreren Regalen (5, 6, 7, 8) von einer ersten Seite (Lagerseite) des Regals (5, 6, 7 ,8,) aus;
d) halb- und/oder vollautomatisiertes Entnehmen der Einzelwaren mit einem Entnahmefahrzeug (9, 10) von einer zweiten Seite (Entnahmeseite) des Regals (5, 6, 7, 8);
und
e) Stapeln der entnommenen Waren auf einen auf dem Entnahmefahrzeug (9, 10) angeordneten Ladungsträger (19) zur Bildung einer Ausgangseinheit.

14. Verfahren nach Anspruch 13,
**dadurch gekennzeichnet, dass**
ca. wenigstens 80%, insbesondere ca. wenigstens 90%, vorzugsweise ca. wenigstens 95%oder alle für die Kommissionierung vorgesehenen Waren von einem einzigen Entnahmefahrzeug (9, 10) entnommen werden können oder ca. wenigstens 80%, insbesondere ca. wenigstens 90%, vorzugsweise ca. wenigstens 95% oder alle Kommissioniervorgänge von jeweils einem Entnahmefahrzeug (9, 10) erledigt werden können.

15. Verfahren nach Anspruch 13 oder 14,
**dadurch gekennzeichnet, dass**
beim Depalettieren die Waren zumindest teilweise auf Ladungsträgem (Trays) angeordnet werden und/oder dass die Ladungsträger für die Waren auf dem Weg von der Depalletierstation (2) bis zu einem der Regale (5, 6, 7, 8) und/oder in einem der Regale Paletten, EU-Paletten, halbe EU-Paletten, Viertel-EU-Paletten, einlagige oder mehrlagige Trays oder Tabletts, Einzeltrays oder -tabletts und/oder Behälter sind und/oder dass die Ladungsträger für die kommissionierten Waren Paletten, EU-Paletten, halbe EU-Paletten, Viertel-EU-Paletten, Rollcontainer, Einzelbehälter, Mehrfachbehälter auf Behälterplatten und/oder Transportregale umfassen.

## Claims

1. Order-picking apparatus,
comprising
a depalletising station, which fully automatically separates the goods from an inbound unit into single goods,
materials handling (3) for automatic transportation of the single goods from the depalletising station to racking by means of indirect target tracking, m which an identification station is dispensed with, and having means for recording whether the previously known good has travelled a specified travel distance,
racking with at least two or more racks (5, 6, 7, 8) and with a full) automatic rack vehicle (4) on a first side (storage side) of each rack (5, 6, 7,8), wherein the rack vehicle (4) stores the jungle goods in the racking (5, 6, 7, 8) from the materials handling (3) in an automated manner, and with at least one picker vehicle (9, 10) having at least one load carrier (19) for the picked goods, said picker vehicle being arranged on a second side (picking front) of each rack (5, 6, 7, 8), said second side being opposite the storage side with the rack vehicle (14)

2. Apparatus in accordance with claim 1,
**characterised by** the fact that
the order picking system is configured to be semi automatic and/or fully automatic, wherein, in the semi-automatic configuration the goods are retrieved manually from the picking front, whereas, in the fully automatic configuration, the goods are retrieved m automated manner by a machine

3. Apparatus in accordance with claim 1 or 2,
**characterised by** the fact that
at least one picker vehicle (EPM) (9, 10) is configured for at least one operator (18), who transfers the goods from the rack (5, 6, 7, 8) onto the load carrier (19) for order-picked goods.

4. Apparatus in accordance with claim 1 or 2,
**characterised by** the fact that
the at least one picker vehicle (9, 10) comprises a storage and retrieval machine for automated retrieval of the goods from the rack (5, 6, 7, 8).

5. Apparatus in accordance with any of the previous claims,
**characterised by** the fact that
a rack (5, 6, 7, 8) with at least one rack vehicle (4) and a picker vehicle (9, 10) forms a rack module.

6. Apparatus in accordance with claim 5,
**characterised by** the fact that
a rack module additionally comprises a second rack (5, 6, 7, 8), and a second rack vehicle (9, 10) is assigned to the rack module and/or a rack module additionally comprises a replenishing rack (16) and/or that several modules with several racks (5, 6, 7, 8) and several rack and picker vehicles (4, 9, 10) are provided.

7. Apparatus in accordance with any of the previous claims,
**characterised by** the fact that
a rack (5, 6, 7, 8) or rack module has a number of storage spaces (17), which are accessible from a picker vehicle (9, 10), wherein the number of these storage spaces (17) corresponds to at least about 80%, especially at least about 90%, preferably at least about 95% or all of the orders to be picked in the apparatus, or is chosen such that at least about 80%, especially at least about 90%, preferably at least about 95% or all picking processes can each be accomplished by one picker vehicle (9, 10).

8. Apparatus in accordance with any of the previous claims,
**characterised by** the fact that
the rack (5, 6, 7, 8) comprises several storage spaces (17) for similar single goods one behind the other from the side of the rack vehicle (4) to the side of the picker vehicle (9, 10).

9. Apparatus in accordance with any of the previous claims,
**characterised by** the fact that
the device comprises supplementary (14) systems for picking a small proportion of goods to be picked.

10. Apparatus in accordance with any of the previous claims,
**characterised by** the fact that
materials handling (3) is provided between depalletising station (2) and racking and is set up such that it transfers the separated goods from the depalletising station (2) to the racking fully automatically and/or the depalletising station comprises a device for arranging the goods on trays.

11. Apparatus in accordance with any of the previous claims,
**characterised by** the fact that
the picker vehicle (9, 10) is set up such that it is moved in an automated manner to the picking position.

12. Apparatus in accordance with any of the previous claims,
**characterised by** the fact that
a pointing device is present which indicates where the good is placed or must be placed on the load carrier (19) for picked goods.

13. Order-picking method comprising:
a) automated depalletising of goods of an inbound unit (1) into separate goods (single goods);
b) automated transport of the single goods into racking by means of indirect target tracking, in which no identification of the goods occurs, but rather it is merely recorded whether the previously known good has travelled a specified travel distance.
c) automated storage in one of two or more racks (5, 6, 7, 8) from a first side (storage side) of the rack (5, 6, 7, 8);
d) semi-automated and/or fully automated retrieval of the single goods with a picker vehicle (9, 10) from a second side (picking front) of the rack (5, 6, 7, 8); and
e) stacking of the retrieved goods onto a load carrier (19) arranged on the picker vehicle (9, 10) to form an outbound unit.

14. Method in accordance with claim 13,
**characterised by** the fact that
at least about 80%, especially at least about 90%, preferably at least about 95% or all of the goods to be picked can be retrieved by a single picker vehicle (9, 10) or at least about 80%, especially at least about 90%, preferably at least about 95% or all picking processes can each be accomplished by one picker vehicle (9, 10).

15. Method in accordance with claim 13 or 14,
**characterised by** the fact that
during depalletising at least some of the goods are arranged on load carriers (trays) and/or that the load carriers for the goods on the way from the depalletising station (2) to one of the racks (5, 6, 7, 8) and/or in one of the racks are pallets, EU pallets, EU half-pallets, EU quarter-pallets, single-layer or multiple layer trays, single trays and/or containers and/or that the load carriers for the picked goods comprise pallets, EU pallets, EU half-pallets, EU quarter-pallets, roll containers, single containers, multiple containers on container boards and/or transport racks.

## Revendications

1. Dispositif pour rassembler et préparer des marchandises qui comprend :
un poste de dépalettisation qui sépare les marchandises de manière entièrement automatique d'une unité d'entrée en marchandises au détail,
une technique de transport pour le transport automatique des marchandises au détail du poste de dépalettisation vers un entrepôt à rayonnages par poursuite de cible indirecte pour laquelle il est renoncé à un poste d'identification et avec des moyens pour détecter si la marchandise connue auparavant a effectué un certain parcours,
un entrepôt à rayonnages avec deux ou plusieurs rayonnages (5, 6, 7, 8) et avec un gerbeur entièrement automatique (4) sur un premier côté (côté de l'entrepôt) de chaque rayonnage (5, 6, 7, 8), le gerbeur (4) stockant les marchandises au détail de manière automatisée par la technique de transport (3) dans l'entrepôt à rayonnages (5, 6, 7, 8) et avec au moins un véhicule de prélèvement (9, 10) avec au moins un porteur de chargement (19) pour les marchandises rassemblées et préparées qui est placé sur un second côté (côté de prélèvement) de chaque rayonnage (5, 6, 7, 8) qui est situé en face du côté de l'entrepôt avec le gerbeur (14).

2. Dispositif selon la revendication 1,
**caractérisé en ce**
**que** le système de rassemblement et de préparation est configuré de manière semi-automatique et/ou entièrement automatique, cependant que, pour la configuration semi-automatique, les marchandises sont prélevées manuellement sur le côté de prélèvement tandis que, pour la configuration entièrement automatique, les marchandises sont prélevées de manière automatisée par un appareil.

3. Dispositif selon la revendication 1 ou 2,
**caractérisé en ce**
**que** le véhicule de prélèvement (EPM) (9, 10) qui existe au moins est configuré pour au moins un opérateur (18) qui transfère les marchandises du rayonnage (5, 6, 7, 8) au porteur de chargement (19) pour les marchandises rassemblées et préparées.

4. Dispositif selon la revendication 1 ou 2,
**caractérisé en ce**
**qu'**au moins un véhicule de prélèvement (9, 10) comprend un appareil de desserte d'entrepôt pour le prélèvement automatique des marchandises du rayonnage (5, 6, 7, 8).

5. Dispositif selon l'une des revendications précédentes,
**caractérisé en ce**
**qu'**un rayonnage (5, 6, 7, 8) forme un module de rayonnages avec au moins un gerbeur (4) et un véhicule de prélèvement (9, 10).

6. Dispositif selon la revendication 5,
**caractérisé en ce**
**qu'**un module de rayonnages comprend en plus un second rayonnage (5, 6, 7, 8) et qu'un second gerbeur (9, 10) est assigné au module de rayonnage et/ou qu'un module de rayonnages comprend de plus un rayonnage de réserve (16) et/ou que plusieurs modules sont prévus avec plusieurs rayonnages (5, 6, 7, 8) et plusieurs gerbeurs et véhicules de prélèvement (4, 9, 10).

7. Dispositif selon l'une des revendications précédentes,
**caractérisé en ce**
**qu'**un rayonnage (5, 6, 7, 8) ou module de rayonnage présente un nombre d'emplacements de stockage (17) qui sont accessibles à partir d'un véhicule de prélèvement (9, 10), le nombre de ces emplacements de stockage (17) correspondant au nombre d'environ au moins 80%, en particulier d'environ au moins 90%, de préférence d'environ au moins 95% ou de toutes les marchandises à rassembler et à préparer ou qu'il est choisi tel qu'environ au moins 80%, en particulier environ au moins 90%, de préférence environ au moins 95% ou toutes les opérations de rassemblement et de préparation peuvent être réalisées par respectivement un véhicule de prélèvement (9, 10).

8. Dispositif selon l'une des revendications précédentes,
**caractérisé en ce**
**que** le rayonnage (5, 6, 7, 8) comprend plusieurs emplacements de stockage (17) pour les mêmes marchandises au détail l'un derrière l'autre du côté du gerbeur (4) au côté du véhicule de prélèvement (9, 10).

9. Dispositif selon l'une des revendications précédentes,
**caractérisé en ce**
**que** le Dispositif comprend des systèmes complémentaires (14) pour rassembler et préparer un faible pourcentage de toutes les marchandises à rassembler et à préparer.

10. Dispositif selon l'une des revendications précédentes,
caractérisé en de
que la technique de transport (3) est installée entre le poste de dépalettisation (2) et l'entrepôt à rayonnages de telle manière qu'elle transfère les marchandises séparées de manière entièrement automatique du poste de dépalettisation (2) à l'entrepôt à rayonnages et/ou le poste de dépalettisation comprend un dispositif pour placer les marchandises sur des porteurs (plateaux).

11. Dispositif selon l'une des revendications précédentes,
**caractérisé en ce**
**que** le véhicule de prélèvement (9, 10) est installé de manière telle qu'il est déplacé de manière automatisée à la position de prélèvement.

12. Dispositif selon l'une des revendications précédentes,
**caractérisé en ce**
**qu'**un dispositif indicateur existe qui indique où la marchandise est déposée ou doit être déposée sur le porteur de chargement (19) pour les marchandises rassemblées et préparées.

13. Procédé pour rassembler et préparer des marchandises qui comprend :
a) la dépalettisation automatisée de marchandises d'une unité d'entrée (1) en marchandises séparées (marchandises au détail) ;
b) le transport automatisé des marchandises au détail dans un entrepôt à rayonnages par poursuite de cible indirecte pour laquelle aucune identification des marchandises n'est réalisée mais seulement une détection du fait de savoir si la marchandise auparavant connue a parcouru un certain trajet ;
c) l'entreposage automatisé dans l'un de deux rayonnages ou plus (5, 6, 7, 8) à partir d'un premier côté (côté de l'entrepôt) du rayonnage (5, 6, 7, 8),
d) prélèvement semi-automatique et/ou entièrement automatique des marchandises au détail avec un véhicule de prélèvement (9, 10) d'un second côté (côté de prélèvement) du rayonnage (5, 6, 7, 8) et
e) empilage des marchandises prélevées sur un support de chargement (19) placé sur le véhicule de prélèvement (9, 10) pour former une unité de sortie.

14. Procédé selon la revendication 13,
caractérisé en ce
environ au moins 80%, en particulier environ au moins 90%, de préférence environ au moins 95% ou toutes les marchandises prévues pour être rassemblées et préparées peuvent être prélevées par un seul véhicule de prélèvement (9, 10) ou environ au moins 95% ou toutes les opérations de rassemblement et de préparation peuvent être effectuées par respectivement un véhicule de prélèvement (9, 10).

15. Procédé selon la revendication 13 ou 14,
**caractérisé en ce**
**que**, lors de la dépalettisation, les marchandises sont placées au moins partiellement sur des supports de chargement (plateaux) et/ou que les supports de chargement pour les marchandises sur le chemin du poste de dépalettisation (2) jusqu'à l'un des rayonnages (5, 6, 7, 8) et/ou dans l'un des rayonnages sont des palettes, des palettes Euro, des demi-palettes Euro, des quarts de palettes euro, des plateaux une couche ou multicouches, plateaux individuels et/ou conteneurs et/ou que les supports de chargement pour les marchandises rassemblées et préparées comprennent des palettes Euro, des demi-palettes Euro, des quarts de palettes euro, des conteneurs roulants, des conteneurs individuels, des conteneurs multiples sur des plateaux de conteneurs et/ou des rayonnages de transport.
